# EUROPEAN PATENT SPECIFICATION

(11) **EP 1 551 709 B1**
(45) Date of publication and mention of the grant of the patent: **29.03.2006**
(21) Application number: 03765395.3
(22) Date of filing: 09.07.2003
(51) Int. Cl.: B64D 11/04, B61D 37/00, A47B 51/00

(54) **MODULAR GALLEY FOR AN AIRCRAFT OR TRAIN AS WELL AS WALL AND MODULE FOR SUCH A GALLEY AND AIRCRAFT OR TRAIN EQUIPPED THEREWITH**
MODULARE BORDKÜCHE FÜR EIN FLUGZEUG ODER EINEN ZUG SOWIE WAND UND MODUL FÜR SOLCH EINE BORDKÜCHE UND FLUGZEUG ODER ZUG, DAS BZW. DER DAMIT AUSGESTATTET IST
CUISINE MODULAIRE POUR UN AVION OU UN TRAIN, PAROI ET MODULE POUR LADITE CUISINE ET AVION OU TRAIN EQUIPE DE CETTE CUISINE

(30) Priority: 18.07.2002 NL 1021107
(43) Date of publication of application: 13.07.2005
(73) Proprietor: Driessen Aircraft Holding B.V., 1770 AA Wieringerwerf (NL)
(72) Inventor: VAN LOON, Laurentius, Petrus, Joseph, NL-1774 AK Slootdorp (NL)
(74) Representative: van Westenbrugge, Andries
(86) International application number: PCT/NL2003/000506
(87) International publication number: WO 2004/009444

(56) References cited:
- EP-A- 0 661 015
- DE-C- 4 029 628
- US-A- 2 854 307
- US-A- 3 472 219
- US-A- 4 055 317
- US-A- 5 322 244
- HOFFMANN M ET AL: "DER LOUNGE- UND SERVICEWAGEN FUR DIE D.A.CH-HOTELZUG AG LOUNGE AND SERVICE CAR FOR D.A.CH HOTELZUG AG" ZEITSCHRIFT FUR EISENBAHNWESEN UND VERKEHRSTECHNIK. DIE EISENBAHNTECHNIK + GLASERS ANNALEN, GEORG SIEMENS VERLAGSBUCHHANDLUNG. BERLIN, DE, vol. 119, no. 2, 1 February 1995 (1995-02-01), pages 45-49,52-54, XP000489273 ISSN: 0941-0589

## Description

The present invention relates to a modular galley for an aircraft or train.

Such modular galleys are known for instance, from document US-A-4 055 317, which represents the closest prior art. For aircraft in particular these galleys are fully assembled by specialist suppliers so that they can then be fitted as a unit in the aircraft. Such galleys consist of a frame, the dimensions of which are dictated by the dimensions of the aircraft at the location where the galley is to be installed, as well as a multiplicity of modules permanently fixed to the frame. In accordance with the state of the art, and also in accordance with the invention, these modules can comprise cupboards, ovens, cooling installations, such as refrigerators or insulated cabinets provided with a cooling medium, water supplies, coffee machines, ovens, water boilers, etc. Connections to the water supply, power supply or air supply are needed for a number of such modules. These connections are made permanently using methods that are non-standard or at least are hardly standard. The various aspects mean that for an aircraft such a galley, as it is known in aircraft circles, is a fixed unit that once it has been installed remains in place in the aircraft and cannot be adapted specifically to the wishes of the passengers. In practice it is found that the wishes of the passengers are usually dependent on the route on which the aircraft is employed. In the case of aircraft galleys, just as with other systems, components etc. to be installed in an aircraft, it is extremely important that the various components are fixed to the aircraft in a very reliable manner or that it is ensured in some other way that at least nothing is able to float around the aircraft during turbulent flying conditions or in emergency situations.

The disadvantage of the known galleys is that there is no uniformity of construction between the various galleys for diverse types of aircraft - connections are always made and assembly is always carried out more or less as the engineer sees fit when building the prototype -, that the galley cannot be adapted depending on the wishes of the passengers - therefore, galleys are usually used that have more or less standard equipment per airline - and that re-equipping or modifying the equipment of a galley is not possible other than during maintenance of the aircraft by specialist personnel since the galley and the modules are fixed permanently, or at least such that they cannot easily be uncoupled, in the aircraft.

The aim of the present invention is to provide a galley, as it is known in aircraft circles, for an aircraft or train, which galley can easily be re-arranged, optionally per flight or run, or at least can be adapted to the anticipated desires of the passengers on that flight or run. A further aim in this context is to standardise the galley to a greater extent.

The abovementioned main aim is achieved according to the invention by providing a modular galley for an aircraft or train, comprising:
- a wall provided with a multiplicity of guides running in the vertical direction with undercut slots;
- a multiplicity of modules with runners on the rear that can be accommodated in the undercut slots;
- lifting means for raising or lowering a said module, the runners of which have been accommodated in a said undercut slot, over the wall.

By providing a wall with a multiplicity of guides running in the vertical direction with undercut slots and the galley modules, which preferably are essentially in the form of a block but also can very well be in the form of a worktop or a seat - that can be wall-mounted - for crew, to be provided at the rear with runners than can be accommodated in said undercut slots, as well as providing lifting means, it becomes possible to hook the galley modules by means of their undercut runners into an undercut slot and then to bring these to the correct height with respect to the wall by means of the lifting means. As soon as the undercut runners have been hooked into the undercut slots, the galley module is then attached to the wall and, except for the possibility of sliding along the slot, also fixed to the wall. With this arrangement the lifting means enable easy and rapid assembly without special tools, for example for bringing a galley module that is to be mounted high to the right height and position correctly in front of the wall. With this arrangement the runners can optionally be so constructed that they can be inserted in the slot in such a way that they can then be hooked into the undercut part of the slot by means of a projection, which can be swung inwards against resilient force to allow insertion in the slot. The guide with undercut slots can be rails mounted on the wall-projecting outwards with respect to the plane of the wall -, but can equally well be sunk in the wall, for example rails sunk in the wall or slots made directly in the wall. The wall can be either a fixed wall or a movable wall.

In order to ensure reliable, rattle-free fixing of the modules to the wall it is preferable according to the invention if the runners are of undercut construction corresponding to the slots. This is understood in particular to mean that, viewed in the horizontal plane, the runners have a cross-sectional shape that corresponds to the cross-sectional shape of the undercut slots, viewed in the horizontal plane.

With a view to reliable fixing of the modules to the wall and a simple procedure for this as well as a simple procedure for uncoupling the modules from the wall, it is preferable according to the invention if the slots are widened in places such that, on the one hand, a said undercut runner can be inserted here, essentially unimpeded, in the horizontal direction so as then to hook into the respective undercut slot after being moved vertically and that, on the other hand, the runner hooking into the slot can be removed from the slot in the horizontal direction after it has been positioned in the widened part of the slot. In this way it becomes possible, inter alia, to construct the runner as a component without moving parts, such as a moving projection. This makes functioning of the runner more reliable, in which context it must be borne in mind in particular that the runner is also an important component in locking the module to the aircraft. All that is needed to fix the module is for the runners of the module to be inserted via a widened section into one or more slots and then for the module to be moved, with or without the aid of the lifting means, along the slot, as a consequence of which the runners will hook into the undercut slot. Precisely the reverse procedure is adopted for removing a module from the wall; the module will be positioned, with or without the aid of the lifting means, such that the runners are in a widened section of the slot, after which the module can easily be removed from the wall.

In order further to facilitate the mounting of modules on the wall and the removal of modules from the wall, in particular so that the physical exertion of the personnel required is as low as possible, it is preferable according to the invention if the widened sections of the slots are provided close to the floor, such that a module placed on the floor, optionally also supported by a mobile platform, can be moved over the floor and placed in contact with the wall so that the runners project into the slot via the widened sections - lifting operations are not necessary for this - so as then to be able to raise the module up the slot to the desired mounting height with the aid of the lifting means. With this arrangement it will, in particular, be the case that the widened sections of the slots are at a height above the floor of the galley such that a module placed on the floor in front of the slot concerned completely overlaps the widened section.

According to a further advantageous embodiment of the invention, the slots, viewed in a horizontal plane, have an essentially T-shaped form, the leg of the T pointing away from the wall. In this way a slot is obtained that as it were is undercut on two sides, which makes it possible, in particular, reliably to prevent a module mounted on the wall from swinging with respect to the wall in the horizontal plane about an essentially vertical axis. A further requirement for this is that the runners on the module are constructed such that they are essentially undercut on two sides. An undercut of the runners on two sides can be achieved either by constructing each runner with an undercut on two sides - which is preferred - or by working with pairs of runners in each case, one of which, for example, is constructed with an undercut on the left and the other of which, for example, is constructed with the undercut on the right. According to a particularly preferred embodiment, the runners will be shaped like a mushroom.

It will be clear to those skilled in the art that the lifting means can be constructed in a wide variety of ways that fall within the scope of the claims. However, it is preferable to construct the lifting means such that they are reliable in operation and of simple construction. This can be achieved according to the invention if the lifting means comprise a spindle - provided with external screw thread - that runs vertically in the wall with a lifting arm that projects from the wall and can be moved along the spindle by means of matching internal screw thread. The spindle can be driven in a wide variety of ways to make it rotate, for example manually, but it will preferably be driven by a motor, for example by means of an electric motor. With this arrangement the number of revolutions that the spindle makes is proportional to the vertical height over which the lifting arm is raised or lowered. Such operation can easily be automated.

According to yet a further embodiment it is preferable if the modular galley furthermore comprises locking means that are provided on the wall and on each module and interact with one another, for fixing a said module at a specific height. Such locking means can be constructed in a wide variety of ways and make it possible for the lifting means to be uncoupled from the module after the module has been brought to the desired height so as to use these lifting means, for example, for bringing a subsequent module located below or optionally above to the correct height. According to the invention, the locking means can comprise a pin that is provided on the wall or the module and can be slid outwards in the horizontal direction, as well as a pin seat provided in the module or the wall- depending on where the pin is provided. The pin then as it were shoots or slides out of the wall or the module into the pin seat provided on the other part - the module or the wall - so as thus to fix the module on the wall in the vertical direction.

In order, insofar as is necessary, easily to be able to provide the modules with a gas, such as air, water, data and/or power, or, if appropriate, easily to be able to discharge a gas or water or to be able to output data from a module, it is preferable according to the invention if the wall and one or more of the modules are provided with connecting means for gas, water, data exchange and/or power. In this context the wall will, in particular, be provided with a connection unit equipped with a gas supply connector, a gas discharge connector, water supply connector, water discharge connector and a power connector and data communication bus. Depending on what is housed in the module, the module can then be provided with a matching gas supply connector and/or gas discharge connector and/or water supply connector and/or water discharge connector and/or power connector. What this then comes down to is that, as it were, an assembly of plug and socket is provided with connectors that can simply be pushed into one another. Such connectors that can simply be pushed into one another are known per se from the state of the art and do not require any further explanation for those skilled in the art.

According to a further embodiment, the modular galley according to the invention comprises a number of vertical sections alongside one another, with, per section;
- at least two of said slots;
- in the wall, at least one gas supply, gas discharge, water supply, water discharge and power connector; and
- lifting means.
What is achieved by providing two slots per section is that a module can in each case be fixed to the wall via runners hooking into two slots, which is beneficial for the reliability of the fixing. As a result of providing lifting means per vertical section it is not necessary to move lifting means between the sections, which appreciably increases the ease of use when fitting and removing modules. By providing the wall per vertical section with every type of connection that can be needed, great freedom of arrangement is achieved with regard to the distribution of various types of modules over the wall.

According to yet a further embodiment of the invention, the modular galley has one or more service trolleys placed underneath a said module. Service trolleys are trolleys which are wheeled through the aircraft cabin to provide the passengers with snacks.

According to a further aspect, the present invention relates to a wall for a modular galley according to the invention and to an aircraft or train provided with such a wall.

According to yet a further aspect, the invention relates to a module for a modular galley according to the invention.

According to yet a further aspect the present invention relates to an aircraft or train provided with a wall according to the invention or with a modular galley according to the invention.

The present invention will be explained in more detail below with reference to an example shown highly diagrammatically in the drawing. In the drawing:
Figure 1 shows a diagrammatic, perspective view of a modular galley according to the invention;
Figure 2 shows, diagrammatically, a horizontal section of a detail according to the line II-II from Figure 1; and
Figure 3 shows a diagrammatic view of the rear of a module, also termed galley module, according to the invention.

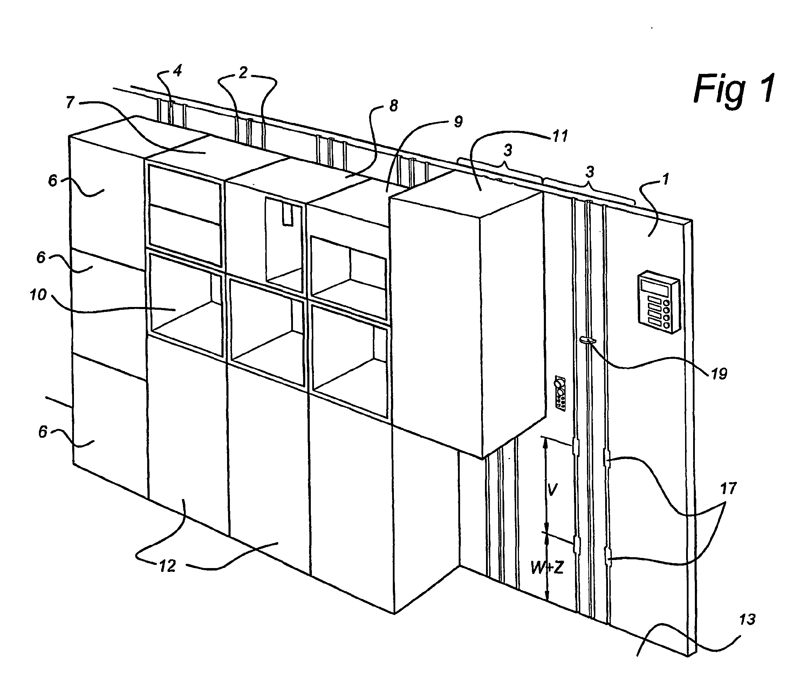

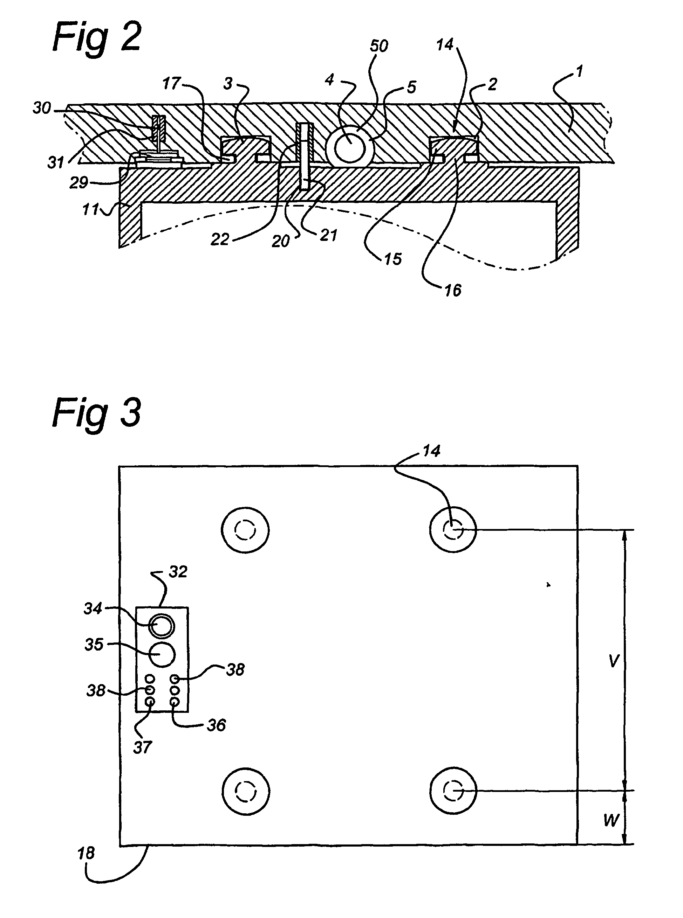

With reference to, in particular, Figures 1 and 2, a wall 1, termed system wall, is shown. The system wall 1 is so to say sub-divided into vertical sections 3, six in the present case. Each vertical section 3 is provided with two slots 2 and a spindle 4. Here, per section 3, the spindle 4 is in each case fitted between two slots 2. However, it will be clear to those skilled in the art that it would be possible to work with one slot or with more than two slots 2 per section and that the spindle 4 does not necessarily have to be central, although this will be preferred.

As can be seen in particular in Figure 2, each slot 2 has a T-shaped cross-section viewed in the horizontal plane, the so-called leg of the T-shape pointing away from the wall 1 so as thus to obtain a slot that is undercut on two sides.

The spindle 4 consists of a rod provided with external screw thread, on which a bush 5, which is provided with internal screw thread and externally has a non-circular peripheral shape, is provided. This bush is accommodated in a vertical guide 50 and because of its non-circular peripheral shape will be prevented from rotating in the vertical guide 50. The bush 5, in turn, supports a lifting arm 19 that projects from the wall 1.

Again with reference to, in particular, Figure 1 it can be seen that a number of modules 6, 7, 8, 9, 10 and 11 have been mounted on the wall 1. As is indicated by the different reference numerals, these modules are of various types and/or of various sizes. The modules 6 are, for example, all cabinet modules with a door that can be opened and which is intended for housing stocks. The module 7 is, for example, a drawer module, the module 8 is a module by means of which ice cubes can be made, module 9 is a module for making coffee and tea and the modules 10 are a type of cabinet module with (not shown) a door that hinges about a horizontal hinge axis along the bottom edge so as to provide a worktop when hinged open. Module 11 is a refrigerator module. It should be clear that these modules are merely examples of possibilities and that a wide variety of other modules are possible and conceivable completely within the scope of the claims of the present application. For instance, inter alia, consideration can be given to a sink unit module with a water tap, an oven module, etc.

So-called service trolleys 12 can be positioned underneath the modules 10 and 11. Here, the service trolleys are shown only as positioned underneath module 10; the service trolley that can be positioned underneath module 11 has not been shown in order to illustrate the various features. For the purposes of illustration, the right-hand section 3 of the wall has also been left free in Figure 1. The service trolleys 12 can thus be taken away from the wall and wheeled through the cabin to provide the passengers with, for example, the desired snacks.

As is shown in particular in Figures 2 and 3, each module is provided on the back with a number of runners 14. The number of runners 14 will be at least one per slot 2 and preferably two per slot 2.

So that the runners 14 are able to project into the respective slots 2 in such a way that the widened parts 15 of the runners 14 drop into the undercut of the slot 2, it would be possible to provide for the widened part 15 to be compressible against the action of, for example, a spring, such that they are initially completely within the body section 16 in order to be able to pass by the leg of [lacuna] T-shaped slot. However, such runners will require moving parts, which can adversely affect the reliability of operation. From this point of view it is preferable to construct the runners 14 without moving parts, for example, and preferably, to make them solid. In this way one arrives at the preferred embodiment of the runners 14, which is mushroom-shaped. So as to make it possible in the case of such runners 14 without moving parts that the runners fit in the slots 2 with their widened section in the undercuts, it is preferable according to the invention to make the slots 2 with widening in places, as has been illustrated in Figure 2 in the case of the left-hand slot 2 and is indicated by 17 and is also shown by 17 in the two right-hand sections in Figure 1. By aligning the runners 14 precisely in front of the widened zone 17 of the slot 2, the module can then be placed directly against the wall 1, the entire runner then being in the slot 2. What is achieved by now moving the runner 2 in the vertical direction together with the module is that the widened sections 15 of the runner 14 engage in the undercuts of the slot 2.

According to the invention it is preferable to provide the (lower) runners of a module on the rear of the module a fixed distance W above the bottom 18 of said module. This is irrespective of the height of the module itself. If the widened sections 17 of the slot are now provided in the wall 1 the same distance W above the floor 13, it is possible to push the modules placed on the floor 13 against the wall and in doing so simply to insert the runners 14 in the widened sections 17 of the slot. In this context it is optionally conceivable also to take account of a skate to be placed under the module, which skate will be not much more than a load-bearing platform with wheels. This makes it possible to wheel the module against the wall instead of pushing it. To give some idea, the height Z can be assumed for the height of this skate (in the absence of a skate Z will be 0). The corollary of this will be that either (as shown in Figs. 1 and 3) the widened sections 17 in the wall 1 are made a height W + Z above the floor 3 or (not shown), which will probably be preferred, the runners 14 are positioned on the rear of the modules at a height W - Z above the bottom 18 of the module, at least if the module concerned is a module that will be wheeled over the floor with the aid of a skate.

If the modules are provided with two runners per slot 2, it is then preferable, for the reasons explained above, always to provide the higher runner 14 a fixed distance V above the lower runner 14 and to provide each slot 2 with two widened sections 17 for the slot, which are a distance V apart.

When a module is placed against the wall 1, the lifting arm 19 provided on the spindle 4 will be sunk in the floor 13 or, in the case of a skate, will drop into a recess in the skate or will optionally fit into a recess in the bottom of the module. As soon as the spindle 4 is then turned in the correct direction, the lifting arm 19 will rise and lift the modules 6, 7, 8, 9,10 or 11 concerned up the wall 1, the runners 14 then hooking into the slot 2. In this way it will then be possible to raise the modules 6, 7, 8, 9, 10 or 11 to a height desired for that module.

As soon as the module has been brought to the desired height by means of the spindle 4 and lifting arm 19, it will have to be ensured in some way or other that the module 11 is held at that height. This can optionally be achieved by keeping the lifting arm 19 permanently at the relevant height. However, this is impractical if, as is shown in the two sections 3 on the left of Figure 1, it is desired to fix several modules 6 to the wall 1 some distance above the ground. Specifically, it would then be necessary to provide several lifting arms on the spindle. In this context it is preferable to provide the wall and module with locking means that interact with one another. By way of example, an example of such locking means is shown highly diagrammatically in Figure 2. The locking means shown in Figure 2 comprise a pin 21 that can be moved by means of a coil 22 actuated electrically between a position in which it is retracted in the wall 1 and a position in which it protrudes from the wall 1 (which latter position in shown in Figure 2). The coil 22 that can be actuated electrically is thus able to drive the pin 21 out of the wall into a pin seat 20 made in the module. It should be clear that in this way it is also possible fully to retract the pin 21 from the position shown in Figure 2 back into the wall 1. It should also be clear that it is also conceivable to provide the pin 21 with coil 22 in the module and to provide the pin seat 20 in the wall. It is also conceivable to work with manually operated locking means.

The wall 1 is also provided, preferably per section 3, with a sort of plug, termed wall plug 23. The wall plug 23 comprises a supporting frame 29 with a compressed air connector 24, a gas discharge 25, a water supply 26, a water discharge 27 and four power connectors 28 thereon. As will be clear or will become clear to a person skilled in the art further types of connectors are provided on said one supporting frame 29. The support frame 29 can be made to stand proud of the wall and retracted into the wall by means of suitable means. This can, for example, be achieved by means of a pin 30 which can be moved in the longitudinal direction by means of a coil 31 that can be electrically actuated. Each module is provided with a corresponding socket, which latter is fixed to the module and is termed the module socket. The module socket 32 will preferably in each case be provided with matching connectors 34, 35, 36, 37, 38 only insofar as this is needed for the functioning of the equipment housed in the module concerned. As soon as a matching connector 34, 35, 36, 37 or 38 is then connected to a connector 24, 25, 26, 27 or 28 the connector 24, 25, 26, 27 or 28 provided on the wall will then, as it were, be opened at least insofar as this is a gas or liquid connector. In the case of, for example, a refrigerator module, a matching connector for compressed air, a matching connector for water supply and for water discharge will usually be superfluous. In the case of an oven module, usually only matching power connectors will be needed. As soon as the module has been brought into the correct position, the wall plug will be pushed forward from the wall, before, after or at the same time as the locking means, so as to be connected to the module socket 32 on the module concerned.

If it is now desired to remove a module from the wall it is necessary only to place the lifting arm under the module by operating the spindle, to retract the wall plug into the wall, to decouple the locking means and to lower the lifting arm with the module bearing thereon to, for example, the floor.

As far as the column of modules 6 down to the ground furthest on the left is concerned, it is pointed out that here the bottom module 6 can be connected to the wall in various ways, optionally with the aid of manually operated connectors. If the bottom module 6 is wheeled by means of a skate until it is in contact with the wall, it will be possible to use the lifting arm 19 and spindle 4 temporarily to lift the top and middle modules 6 together a little so that there is space for the skate and the bottom module 6 together. After the runners 14 of the bottom module 6 have then been inserted in the recesses 17, the skate can be pulled out and the bottom module 6 will lower of its own accord and in the meantime the runners 14 will engage in the undercuts of the slot 2. This can optionally be supported by an additional lifting arm 19. The top and middle module 6 can then be lowered onto the bottom module 6.

## Claims

1. Modular galley for an aircraft or train, comprising:
• a wall (1); and
• a multiplicity of modules (6, 7, 8, 9,10,11)
**characterised in**
**that** the wall (1) is provided with a multiplicity of guides running in the vertical direction with undercut slots (2);
**that** the multiplicity of modules (6, 7, 8,9,10,11) is provided with runners (14) on the rear that can be accommodated in the slots (2) for coupling the modules (6, 7, 8,9,10,11) to the wall (1) by hooking the runners (14) into the slots (2); and
**that** the modular galley further comprises lifting means (4, 19) for raising or lowering a said module (6, 7, 8, 9,10,11), the runners (14) of which have been accommodated in a said undercut slot (2) over the wall (1).

2. Modular galley according to Claim 1, wherein the runners (14) are undercut correspondingly to the slots (2).

3. Modular galley according to Claim 2, wherein the slots (2) are widened in places (17) such that a said undercut runner (14) can be inserted here in the horizontal direction so as then to hook into the respective undercut slots (2).

4. Modular galley according to Claim 3, wherein the widened sections (17) of the slots (12) are at a height (W + Z) above the floor of the galley such that a module (6, 7, 8, 9,10,11) placed on the floor in front of the slot (2) concerned completely overlaps the widened section (17).

5. Modular galley according to one of the preceding claims, wherein the slots (2), viewed in a horizontal plane, have an essentially T-shaped form, the leg of the T pointing away from the wall (1).

6. Modular galley according to one of the preceding claims, wherein the runners (14) are shaped like a mushroom.

7. Modular galley according to one of the preceding claims, wherein the lifting means comprise a spindle (4) that runs vertically in the wall (1) with a lifting arm (19) that projects from the wall (1) and can be moved along the spindle (4) by means of matching internal screw thread.

8. Modular galley according to one of the preceding claims, comprising locking means (20, 21, 22) that are provided on the wall (1) and on each module and interact with one another, for fixing a said module (6, 7, 8, 9, 10, 11) at a specific height.

9. Modular galley according to Claim 8, wherein the locking means comprise a pin (21) that is provided on the wall (1) or the module (6,7,8, 9,10, 11) and can be slid in the horizontal direction as well as a pin seat (20) provided in the module (6, 7, 8, 9, 10, 11) or the wall (1), respectively.

10. Modular galley according to one of the preceding claims, wherein the wall (1) and one or more of said modules (6, 7, 8, 9, 10, 11) are provided with connecting means (24, 25, 26, 27, 28) for air, water, data exchange and/or power.

11. Modular galley according to one of the preceding claims, comprising a number of vertical sections (3) alongside one another, with, per section:
• at least two of said guides with slots (2);
• in the wall, at least one air, water and power connector (29) and optionally at least one data bus; and
• lifting means (20, 21, 19).

12. Modular galley according to one of the preceding claims, further comprising one or more service trolleys (12) placed underneath a said module (6, 7, 8, 9,10, 11).

13. Module (6, 7, 8, 9, 10, 11) for a modular galley according to one of the preceding Claims 1-12, the module being provided, on the rear, with undercut runners (14), which can be hooked in undercut slots (2) on a wall (1).

14. Aircraft provided with a modular galley according to one of Claims 1 - 12.

15. Train provided with a modular galley according to one of Claims 1 -12.

## Patentansprüche

1. Modulare Bordküche für ein Flugzeug oder einen Zug, umfassend:
eine Wand (1); und
eine Vielzahl von Modulen (6, 7, 8, 9, 10, 11)
**dadurch gekennzeichnet,**
**dass** die Wand (1) mit einer Vielzahl von Führungen ausgestattet ist, die in der vertikalen Richtung mit unterschnittenen Schlitzen (2) laufen;
**dass** die Vielzahl von Modulen (6, 7, 8, 9, 10, 11) mit Läufern (14) an der Rückseite ausgestattet ist, die in den Schlitzen (2) untergebracht werden können, um die Module (6, 7, 8, 9, 10, 11) mit der Wand (1) durch Einhaken der Läufer (14) in die Schlitze (2) zu koppeln; und
**dass** die modulare Bordküche ferner Hebemittel (4, 19) zum Anheben oder Absenken eines der Module (6, 7, 8, 9, 10, 11) umfasst, wobei dessen Läufer (14) in einem besagten unterschnittenen Schlitz (2) über der Wand (1) untergebracht wurden.

2. Modulare Bordküche gemäß Anspruch 1, bei der die Läufer (14) den Schlitzen (2) entsprechend unterschnitten sind.

3. Modulare Bordküche gemäß Anspruch 2, bei der die Schlitze (2) an Stellen (17) geweitet sind, sodass ein besagter unterschnittener Läufer (14) hier in der horizontalen Richtung eingeführt werden kann, um dann in die jeweiligen unterschnittenen Schlitze (2) einzuhaken.

4. Modulare Bordküche gemäß Anspruch 3, bei der die geweiteten Abschnitte (17) der Schlitze (12) auf einer Höhe (W + Z) über dem Boden der Bordküche sind, sodass ein Modul (6, 7, 8, 9, 10, 11), das auf dem Boden vor dem betroffenen Schlitz (2) angeordnet ist, vollständig den geweiteten Abschnitt (17) überlappt.

5. Modulare Bordküche gemäß einem der vorhergehenden Ansprüche, bei der die Schlitze (2) von einer horizontalen Ebene aus betrachtet eine im Wesentlichen T-förmige Form aufweisen, wobei der Schenkel des T von der Wand (1) wegzeigt.

6. Modulare Bordküche gemäß einem der vorhergehenden Ansprüche, bei der die Läufer (14) wie ein Pilz geformt sind.

7. Modulare Bordküche gemäß einem der vorhergehenden Ansprüche, bei der die Hebemittel eine Spindel (4) umfassen, die vertikal in der Wand (1) mit einem Hebearm (19) läuft, der von der Wand (1) hervorsteht und entlang der Spindel (4) mit einem passenden Innengewinde bewegt werden kann.

8. Modulare Bordküche gemäß einem der vorgehenden Ansprüche, umfassend Feststellmittel (20, 21, 22), die an der Wand (1) und an jedem Modul bereitgestellt werden und miteinander wechselwirken, um ein besagtes Modul (6, 7, 8, 9,10,11) auf einer spezifischen Höhe zu befestigen.

9. Modulare Bordküche gemäß Anspruch 8, bei der die Feststellmittel umfassen: einen Stift (21), der an der Wand (1) oder dem Modul (6, 7, 8, 9, 10, 11) bereitgestellt wird und in der horizontalen Richtung verschoben werden kann, sowie einen Stiftsitz (20), der jeweils in dem Modul (6, 7, 8, 9, 10, 11) oder der Wand (1) bereitgestellt wird.

10. Modulare Bordküche gemäß einem der vorhergehenden Ansprüche, bei der die Wand (1) und eines oder mehrere der Module (6, 7, 8, 9, 10, 11) mit Verbindungsmitteln (24, 25, 26, 27, 28) für Luft, Wasser, Datenaustausch und/oder Strom ausgestattet sind.

11. Modulare Bordküche gemäß einem der vorhergehenden Ansprüche, die nebeneinander eine Anzahl von vertikalen Abschnitten (3) umfasst, mit je Abschnitt:
mindestens zwei der Führungen mit Schlitzen (2);
in der Wand mindestens einen Luft-, Wasser- und Stromanschluss (29) und gegebenenfalls mindestens einen Datenbus; und
Hebemitteln (20, 21, 19).

12. Modulare Bordküche gemäß einem der vorhergehenden Ansprüche, ferner mit einem oder mehrerer Servierwagen (12), der/die unter einem besagten Modul (6, 7, 8, 9, 10, 11) angeordnet ist/sind.

13. Modul (6, 8, 7, 8, 9, 10, 11) für eine modulare Bordküche gemäß einem der vorhergehenden Ansprüche 1 bis 12, wobei das Modul an der Rückseite mit unterschnittenen Läufern (14) ausgestattet ist, die in unterschnittene Schlitze (2) an einer Wand (1) eingehakt werden können.

14. Flugzeug, das mit einer modularen Bordküche gemäß einem der Ansprüche 1 bis 12 ausgestattet ist.

15. Zug, der mit einer modularen Bordküche gemäß einem der Ansprüche 1 bis 12 ausgestattet ist.

## Revendications

1. Cuisine modulaire pour un aéronef ou un train, comprenant:
- une paroi (1); et
- une pluralité de modules (6, 7, 8, 9, 10, 11)
**caractérisé en ce que** la paroi (1) est munie d'une pluralité de guides s'étendant en direction verticale avec des fentes (2) à contre-dépouille; **en ce que** la pluralité de modules (6, 7, 8, 9, 10, 11) est munie de coulisseaux (14) sur l'arrière, qui peuvent être logées dans les fentes (2) pour accoupler les modules (6, 7, 8, 9, 10, 11) à la paroi (1) en accrochant des coulisseaux (14) dans les fentes (2); et **en ce que** la cuisine modulaire comprend en outre des moyens de levée (4, 19) pour lever ou abaisser un dit module (6, 7, 8, 9, 10, 11), dont les coulisseaux (14) ont été logés dans ladite fente (2) à contre-dépouille sur la paroi (1).

2. Cuisine modulaire selon la revendication 1, dans laquelle les coulisseaux (14) sont munis de contre-dépouilles correspondant aux fentes (2).

3. Cuisine modulaire selon la revendication 2, dans laquelle les fentes (2) sont élargies dans des zones (17) de manière que le coulisseau (14) à contre-dépouille puisse être inséré à cet endroit en direction horizontale pour ensuite s'accrocher dans les fentes (2) à contre-dépouille respectives.

4. Cuisine modulaire selon la revendication 3, dans laquelle les zones (17) élargies des fentes (12) ont une hauteur (W+Z) au-dessus du sol de la cuisinière tel qu'un module (6, 7, 8, 9, 10, 11) placé sur le sol à l'avant de la fente (2) concerné, chevauche complètement la zone (17) élargie.

5. Cuisine modulaire selon l'une des revendications précédentes, dans laquelle les fentes (2) observées dans un plan horizontal ont une forme sensiblement en T, la patte du T pointant étant tournée en s'écartant de la paroi (1).

6. Cuisine modulaire selon l'une quelconque des revendications précédentes, dans laquelle les coulisseaux (14) sont en forme de champignon.

7. Cuisine modulaire selon l'une des revendications précédentes, dans laquelle les moyens de levées comprennent une broche (4) s'étendant verticalement dans la paroi (1) avec un bras de lever (19) faisant saillie de la paroi (1) et pouvant être déplacé le long de la broche (4) au moyen d'un filet de vis interne adapté.

8. Cuisine modulaire selon l'une des revendications précédentes, comprenant des moyens de verrouillage (20, 21, 22) prévus sur la paroi (1) et sur chaque module et interagissant les uns avec les autres pour fixer un dit module (6, 7, 8, 9, 10, 11) à une hauteur spécifique.

9. Cuisine modulaire selon la revendication 8, dans laquelle les moyens de verrouillage comprennent une tige (21) prévue sur la paroi (1) ou sur le module (6, 7, 8, 9, 10, 11) et pouvant être coulissé en direction horizontale ainsi qu'un siège de tige (20) prévu dans le module (6, 7, 8, 9, 10, 11) ou la paroi (1) respectivement.

10. Cuisine modulaire selon l'une des revendications précédentes, dans laquelle la paroi (1) et un ou plusieurs des modules (6, 7, 8, 9, 10, 11) sont munis de moyens de connexion (24, 25, 26, 27, 28) pour l'air, l'eau, un échange de données et/ou de l'énergie.

11. Cuisine modulaire selon l'une des revendications précédentes, comprenant une pluralité de sections (3) verticales le long les unes des autres, avec, par section:
- au moins deux desdits guides avec des fentes (2);
- dans la paroi, au moins un connecteur pour l'air, l'eau, l'énergie (29) et en option au moins un bus de données; et
- des moyens de levée (20, 21, 19).

12. Cuisine modulaire selon l'une des revendications précédentes, comprenant en outre un ou plusieurs chariots (12) placés au-dessous d'un dit module (6, 7, 8, 9, 10, 11).

13. Module (6, 7, 8, 9, 10, 11) pour une cuisine modulaire selon l'une des revendications 1 à 12 précédentes, le module étant pourvu à l'arrière de coulisseaux (14) à contre-dépouille pouvant être accrochés dans des fentes à contre-dépouille (2) sur une paroi (1).

14. Aéronef équipé d'une cuisine modulaire selon l'une des revendications 1 à 12.

15. Train équipé d'une cuisine modulaire selon l'une des revendications 1 à 12.
